## Europäisches Patentamt

## European Patent Office

## Office européen des brevets

(19)

(11) Numéro de publication: **0 129 468**
**B1**

(12) # FASCICULE DE BREVET EUROPÉEN

(45) Date de publication du fascicule du brevet:
**02.09.87**

(51) Int. Cl.⁴: **G 21 D 1/02**

(21) Numéro de dépôt: **84401186.6**

(22) Date de dépôt: **08.06.84**

(54) **Procédé de préchauffage d'une cuve et des structures internes d'un réacteur nucléaire à neutrons rapides refroidi par du métal liquide et moyens de préchauffage correspondants.**

(30) Priorité: **13.06.83 FR 8309733**

(43) Date de publication de la demande:
**27.12.84 Bulletin 84/52**

(45) Mention de la délivrance du brevet:
**02.09.87 Bulletin 87/36**

(84) Etats contractants désignés:
**BE DE GB IT NL**

(56) Documents cité:
**DE-A-2 734 665**
**FR-A-2 189 821**
**FR-A-2 365 863**
**JP-A-53 074 694**
**US-A-3 155 595**

(73) Titulaire: **NOVATOME, La Boursidière R.N. 186, F-92357 Le Plessis Robinson (FR)**

(72) Inventeur: **Kung, Jean- Pierre, 6 D résidence Bel Air, F-91540 Mennecy (FR)**
Inventeur: **Azarian, Garo, 10 allée des Glycines, F-92260 Fontenay- Aux- Roses (FR)**

(74) Mandataire: **Bressand, Georges, c/o CABINET LAVOIX 2 Place d'Estienne d'Orves, F-75441 Paris Cedex 09 (FR)**

EP 0 129 468 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1987

## Description

L'invention concerne un procédé de préchauffage d'une cuve et des structures internes d'un réacteur nucléaire à neutrons rapides refroidi par du métal liquide et des moyens de préchauffage pour la mise en oeuvre de ce procédé.

Les réacteurs nucléaires à neutrons rapides comportent généralement une cuve de grandes dimensions dite cuve principale à symétrie de révolution autour d''un axe vertical renfermant du métal liquide qui est généralement du sodium à l'intérieur duquel est plongé le coeur du réacteur constitué par des assemblages combustibles. Cette cuve principale renferme également un ensemble de structures constituant la cuve interne et permettant de séparer les zones renfermant du sodium liquide chaud sortant du coeur des zones renfermant du sodium liquide froid venant des échangeurs intermédiaires du réacteur.

Dans le cas d'un réacteur nucléaire de type intégré, la cuve principale renferme également des cheminées de passage des composants, pompes et échangeurs intermédiaires, qui plongent dans le sodium liquide remplissant la cuve.

Ces composants comportent une enveloppe creuse dans laquelle passe le sodium liquide de refroidissement.

Le remplissage initial de la cuve du réacteur en sodium liquide pose des problèmes techniques difficiles à résoudre, du fait que le sodium a un point de fusion voisin de 98°C et que la cuve, l'ensemble de ses structures internes et les composants qu'elle renferme sont initialement à la température ambiante.

Il existe en effet des risques de solidification locale du sodium par suite de la présence de grandes masses de métal à température ambiante. Le remplissage de la cuve par du sodium à une température nettement supérieure au point de fusion de ce métal présente des difficultés par suite des chocs thermiques engendrés dans les structures, au moment de l'introduction du sodium à haute température dans la cuve.

On utilise couramment des cordons chauffants électriques pour le maintien en température des tuyauteries de transport de sodium liquide mais de tels cordons chauffants ne seraient que très peu efficaces dans le cas de cuves de très grandes dimensions, telles que les cuves de réacteurs nucléaires à neutrons rapides qui ont généralement des diamètres de l'ordre de vingt mètres. De telles cuves ménagent en effet des espaces vides extrêmement importants entre les différents éléments de la structure interne. En outre, il est souhaitable de laisser la surface extérieure de la cuve la plus accessible possible, en particulier pour pouvoir effectuer par la suite le contrôle des zones critiques telles que les cordons de soudure.

Le démontage des cordons chauffants après remplissage de la cuve est difficile et long à réaliser, la surface externe de la cuve principale étant difficilement accessible et à haute température. La cuve principale est le plus souvent entourée d'une cuve de sécurité qui ne ménage qu'un espace de faible largeur pour accéder à la surface externe de la cuve principale.

On connait, par le FR-A-2 365 863, un procédé de préchauffage des structures internes d'un réacteur nucléaire à neutrons rapides contenues dans une enceinte calorifugée, par circulation d'un gaz neutre à une température supérieure au point de fusion du métal liquide de refroidissement du réacteur. Des moyens de chauffage du gaz neutre sont disposés soit a l'intérieur, soit à l'extérieur de l'enceinte calorifugée. Le gaz neutre ne vient en contact qu'avec la surface externe des composants du réacteur dont on effectue le préchauffage.

Dans le cas d'un réacteur nucléaire de type intégré comportant une cuve et des structures internes de forme complexe en acier inoxydable, un préchauffage utilisant uniquement une circulation de gaz neutre en contact avec la surface externe des composants ne présente pas une efficacité suffisante. Il ne serait pas non plus concevable d'introduire l'ensemble des éléments à préchauffer dans une enceinte calorifugée.

Le but de l'invention est donc de proposer un procédé de préchauffage d'une cuve et des structures internes d'un réacteur nucléaire à neutrons rapides de type intégré, refroidi par du métal liquide, pour son remplissage en métal liquide, consistant à faire circuler en continu un gaz neutre à une température supérieure au point de fusion du métal liquide, d'une part en contact avec la surface extérieure de la cuve et d'autre part, en contact avec sa surface intérieure et ses structures internes comportant des composants ayant une enveloppe creuse, à récupérer le gaz neutre ayant circulé au contact de la cuve et à le réchauffer, à l'extérieur de la cuve, avant de le remettre en circulation, le préchauffage devant permettre d'éviter tout risque de solidification du métal liquide, lors du remplissage de la cuve et les chocs thermiques dans la paroi de cette cuve et dans ses structures internes.

Dans ce but, on fait circuler le gaz neutre aussi bien au contact avec la surface interne qu'avec la surface externe des composants.

L'invention est également relative à des moyens de préchauffage permettant de mettre en oeuvre le procédé suivant l'invention.

Afin de bien faire comprendre l'invention, on va décrire à titre d'exemple non limitatif, en se référant aux figures jointes en annexe, un exemple de mise en oeuvre du procédé suivant l'invention, dans le cas d'une cuve de réacteur nucléaire à neutrons rapides de type intégré.

La figure 1 représente dans une vue en coupe par un plan vertical la cuve d'un réacteur nucléaire à neutrons rapides de type intégré et ses structures internes.

La figure 2 représente dans une vue en coupe analogue à la vue de la figure 1 une cuve de réacteur nucléaire à neutrons rapides équipée de moyens permettant son préchauffage par circulation de gaz.

La figure 3 est une vue en coupe analogue aux vues des figures 1 et 2 montrant la répartition des courants de gaz de préchauffage, dans une première phase du procédé.

La figure 4 est une vue en coupe analogue aux vues des figures 1, 2 et 3 montrant la répartition des courants de gaz de préchauffage dans une seconde phase du procédé où le préchauffage a lieu concurremment au remplissage de la cuve en sodium liquide.

La figure 5 est une vue schématique de l'installation de réchauffage de gaz.

La figure 6 est une vue en élévation de la partie supérieure d'un moyen d'insufflacion du gaz de préchauffage.

La figure 7 est une vue en coupe suivant VI-VI de la figure 6.

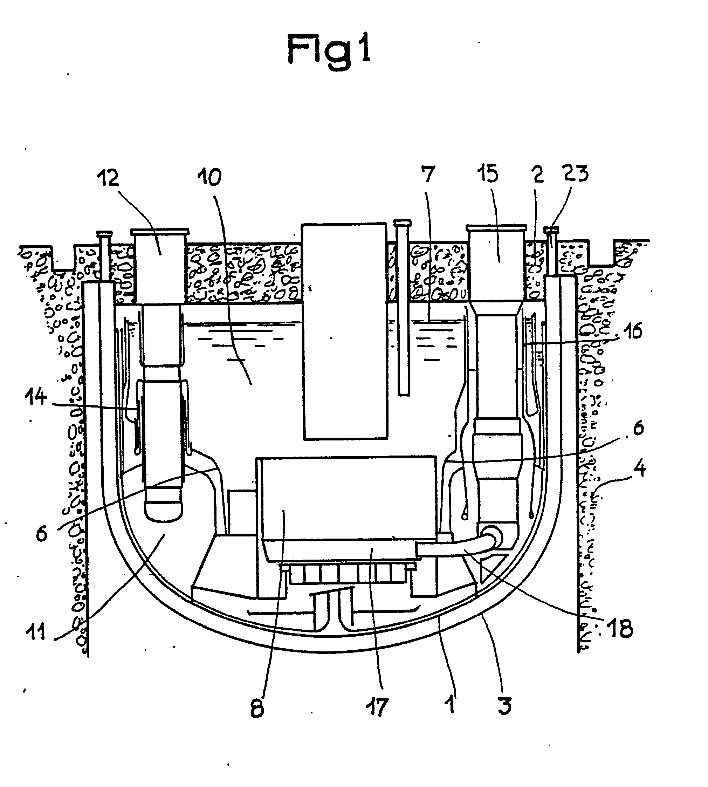

Sur la figure 1, on voit la cuve principale 1 d'un réacteur nucléaire à neutrons rapides de type intégré fixée à la partie inférieure de la dalle 2 du réacteur et entourée de la cuve de sécurité 3 de même forme que la cuve principale. La dalle 2 repose sur la structure en béton 4 du réacteur constituant le puits de cuve.

La cuve du réacteur nucléaire à été représentée dans l'état où elle se trouve lors du fonctionnement du réacteur. La cuve est alors remplie de sodium jusqu'à un niveau 7 et le coeur 8 du réacteur est entièrement plongé dans le sodium liquide. La cuve principale renferme une cuve interne 6 de forme complexe ménageant à l'intérieur de la cuve une zone 10 appelée collecteur chaud renfermant le coeur du réacteur et dans laquelle sort le sodium chaud ayant traversé le coeur de bas en haut.

La zone 11 de la cuve principale située à l'extérieur de la cuve interne est appelée collecteur froid et reçoit le sodium refroidi sortant des échangeurs de chaleur intermédiaires 12 pénétrant dans la cuve par des ouvertures de la dalle 2 et traversant la paroi de la cuve interne 6 grâce à un dispositif de traversée 14 dont l'étanchéité est assurée par du gaz sous pression.

Des pompes 15 plongeant dans le sodium froid grâce à des cheminées de traversée 16 permettent d'établir une circulation du sodium dans la cuve et une différence de pression entre le sodium froid et le sodium chaud. Le sodium froid aspiré par les pompes est envoyé dans le sommier 17 portant le coeur 8 par l'intermédiaire d'une conduite 18.

La cuve interne 6 est généralement constituée par deux parois entre lesquelles subsiste un espace rempli par du sodium froid à haute pression.

Une partie du sodium froid refoulé par les pompes 15 circule en contact avec la paroi interne de la cuve principale 1 pour son refroidissement.

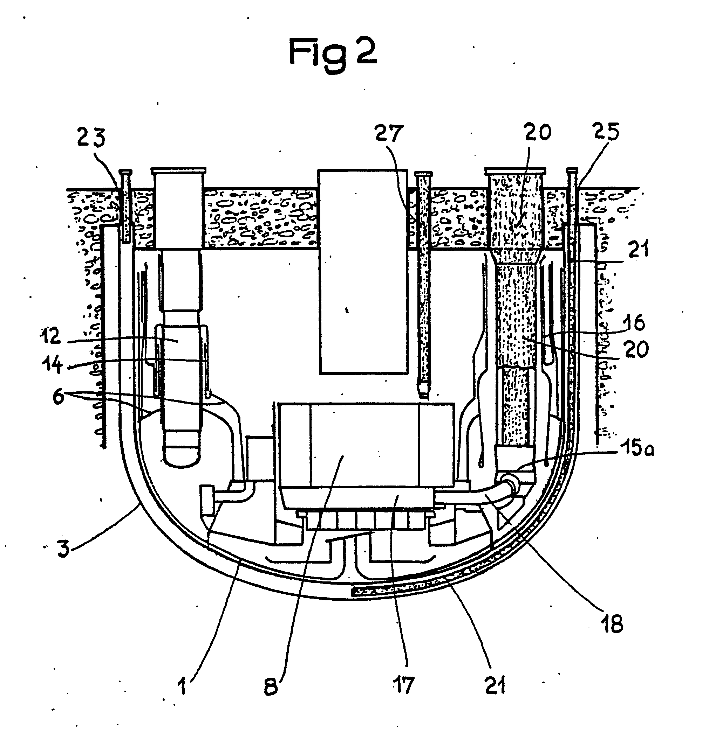

Sur la figure 2 on voit la cuve principale d'un réacteur nucléaire analogue à la cuve représentée à la figure 1 au cours de son préchauffage, préalablement à son remplissage par du sodium liquide.

Les éléments correspondants sur les figures 1 et 2 portent les mêmes repères.

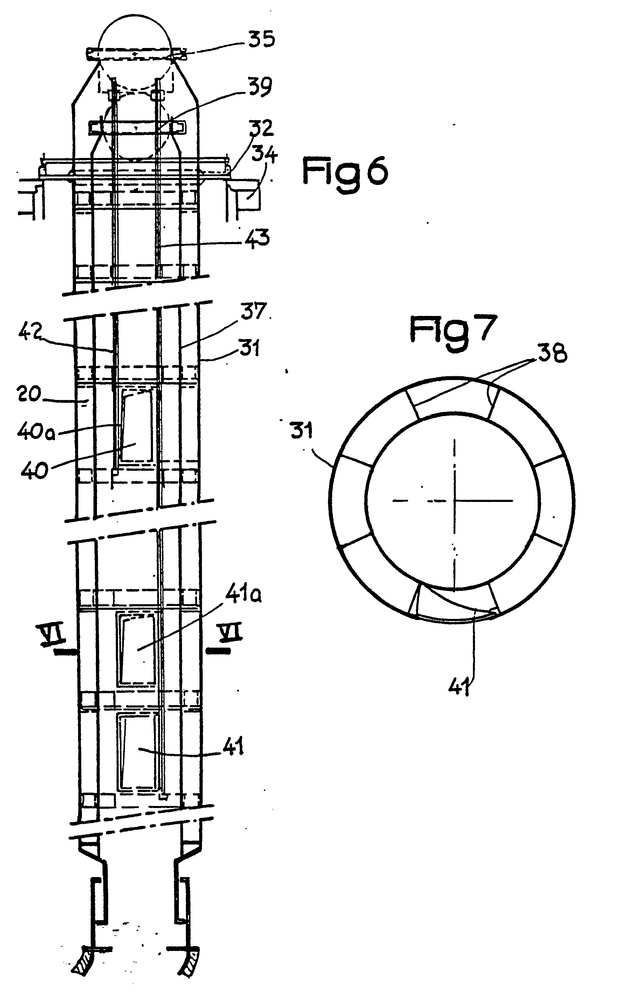

La cuve principale 1 est vide de sodium au début de l'opération de préchauffage et renferme toutes ses structures internes à l'exception d'une pompe 15 remplacée par un dispositif 20 d'insufflation de gaz chaud qui sera décrit plus en détail en se référant aux figures 6 et 7. De façon schématique, ce dispositif 20 est constitué par deux enveloppes tubulaires verticales coaxiales ménageant un conduit central d'insufflation et un conduit périphérique annulaire. Le conduit périphérique annulaire est fermé à sa partie inférieure alors que le conduit central débouche dans le bulbe 15a de la pompe à la place de laquelle est disposé le moyen d'insufflation 20.

Une seule pompe 15 est remplacée par un dispositif d'insufflation 20, les trois autres pompes, dans le cas d'un réacteur nucléaire comportant quatre pompes et huit échangeurs de chaleur, sont mises en place dans la cuve avant le début du préchauffage.

Les huit échangeurs intermédiaires 12 sont mis en place dans leur cheminée de passage étanche 14 reliée à la cuve interne 6.

L'azote à haute température est introduit dans l'espace intercuve par six orifices 23 traversant la dalle et débouchant dans la partie supérieure de cet espace.

L'azote ayant circulé dans l'espace entre les cuves 1 et 3 est récupéré par des tubes souples 21 d'extraction d'azote introduits dans l'espace ménagé entre la cuve principale 1 et la cuve de sécurité 3 par six orifices 25 traversant la dalle et débouchant dans l'espace intercuve. Les orifices 23 et 25 sont disposés de façon alternée sur la périphérie de la dalle.

L'azote peut être aussi insufflé dans l'espace intercuve par des ouvertures réparties le long du tube 21, l'aspiration se faisant alors à la partie supérieure par les tubes introduits par les orifices 23. Dans cette configuration la circulation est inversée par rapport à la précédente.

L'azote récupéré par les tubes 21 (ou 23) est envoyé à une installation de réchauffage.

De l'azote à haute température est également insufflé par le dispositif 20, dans le sommier 17 supportant le coeur 8 du réacteur et dans le collecteur froid du réacteur. Après circulation au contact avec les structures internes du réacteur, l'azote est récupéré par un tube 27 traversant la dalle par le trou d'accès du poste d'évacuation du combustible et descendant sensiblement jusqu'au niveau des têtes d'assemblages du coeur.

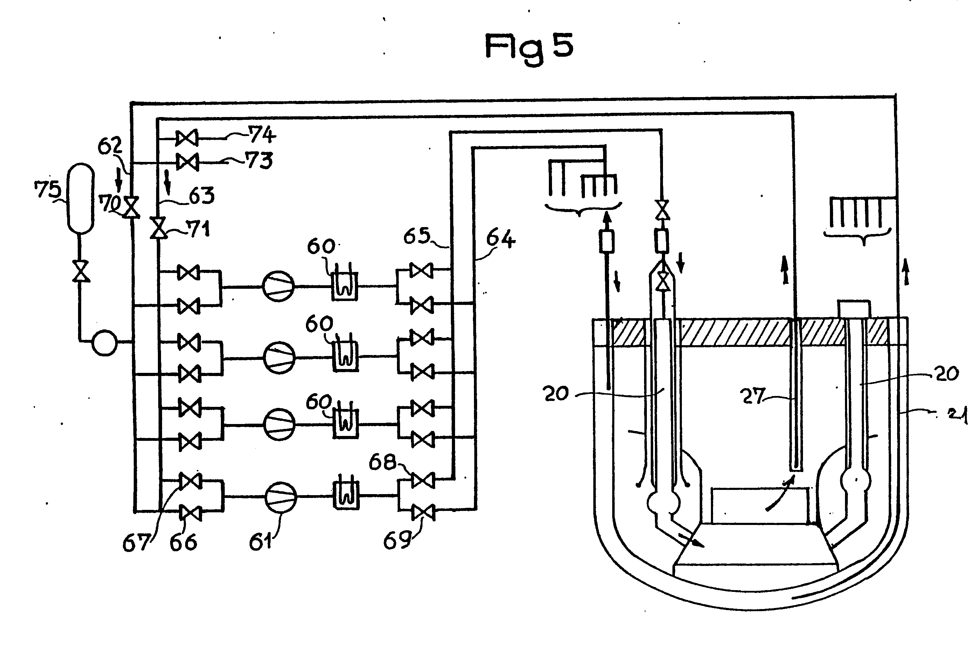

Sur la figure 5 on voit une telle installation de réchauffage qui comporte une batterie de réchauffeurs 60 disposés en parallèle. Chacun des réchauffeurs 60 à chauffage électrique est disposé sur une branche d'un circuit de réchauffage où la circulation de l'azote est commandée par un ensemble de vannes.

Chaque branche du circuit comporte une soufflante 61 pour la mise en circulation du gaz; du côté amont, les branches sont reliées en parallèle à une conduite 62 de récupération du gaz de réchauffage de l'espace inter-cuves et à une conduite 63 de récupération du gaz de réchauffage de l'espace intérieur de la cuve principale 1; du côté aval, les branches sont reliées à une conduite 64 de transport du gaz réchauffé vers l'espace inter-cuves et à une conduite 65 de transport du gaz réchauffé vers l'espace interne de la cuve principale.

Des vannes 66 et 67 sont disposées à l'entrée de chacune des branches sur les conduites 62 et 63 respectivement. De même des vannes 68 et 69 sont disposées à la sortie de chacune des branches sur les conduites 64 et 65 respectivement.

Les conduites 62 et 64 sont reliées à l'espace inter-cuves chacune par l'intermédiaire de six tubes traversant la dalle par les orifices 23 et 25 respectivement.

Les conduites 63 et 65 sont reliées au tube 27 de récupération du gaz dans le collecteur chaud et au moyen d'insufflation 20 respectivement.

Des vannes 70 et 71 permettent de fermer les conduites 62 et 63 à la circulation du gaz, respectivement. Deux conduites 73, 74 d'échappement vers l'atmosphère de l'azote réchauffé munies de vannes sont également placées en dérivation sur les conduites 62 et 63 respectivement.

Un réservoir d'azote 75 est placé en dérivation sur la conduite 62 pour l'alimentation initiale du circuit en azote et pour compenser éventuellement les fuites en cours d'utilisation de l'installation.

L'installation de réchauffage représentée à la figure 5 permet de mettre en service, au cours des différentes phases du préchauffage, tout ou partie des branches du circuit. Les vannes d'entrée et de sortie des branches permettent de diriger l'azote réchauffé dans les branches préférentiellement dans l'espace inter-cuves ou dans l'espace interne de la cuve principale.

On va maintenant décrire, en se référant aux figures 6 et 7, le dispositif 20 d'insufflation d'azote de préchauffage dans le sommier et dans le collecteur froid du réacteur.

Sur la figure 6 on a représenté le dispositif 20 dont la partie inférieure est engagée dans le bulbe 15a de la pompe dont le dispositif 20 occupe l'emplacement. Ainsi qu'il est visible sur les figures 6 et 7, le dispositif d'insufflation 20 comporte un tube extérieur 31 dont le diamètre est sensiblement équivalent au diamètre d'une pompe solidaire à sa partie supérieure d'une bride 32 qui repose sur le support 34 de la pompe lui-même fixé sur la dalle 2, lorsque le dispositif 20 est en place dans la cuve. L'orifice de passage de la pompe dans la dalle 2 est fermé de façon étanche par la bride 32. Le tube extérieur 31 du dispositif d'insufflation 20 est relié à sa partie supérieure à une conduite d'arrivée d'azote à haute température venant de la station de réchauffage de l'azote. Entre cette conduite et le tube 31 est intercalé une vanne papillon 35 permettant le réglage de débit dans le tube 31 et la fermeture de ce tube 31 à sa partie supérieure.

A l'intérieur du tube 31 et coaxialement à celui-ci est disposé un tube interne 37 de plus faible diamètre maintenu dans le tube 31 par des entretoises 38.

A la partie supérieure du tube 37 est disposée une vanne papillon 39 qui permet le réglage de débit du gaz inerte chaud dans le tube 37 et la fermeture de ce tube à sa partie supérieure.

Des ouvertures 40 et 41 sont prévues dans la paroi du tube externe 31 pour la sortie du gaz chaud circulant dans l'espace annulaire périphérique entre les tubes 31 et 37, dans l'espace interne de la cuve. Ces ouvertures 40 et 41 peuvent être fermées par des volets 40a et 41a respectivement dont le débattement s'effectue dans l'espace annulaire entre les tubes 31 et 37 ainsi qu'il est visible sur la figure 6.

Ainsi qu'il est visible sur la figure 6, il existe une ouverture 40 en partie supérieure du dispositif 20, à un niveau situé un peu en-dessous du niveau supérieur du sodium lorsque la cuve est remplie et deux ouvertures 41 situées à la partie inférieure du dispositif 20 un peu au-dessus de la partie de ce dispositif s'engageant dans le bulbe 15a de la pompe.

L'ouverture 40 peut être fermée par un volet 40a solidaire d'une tige 42 permettant son ouverture ou sa fermeture et son blocage dans ces positions.

Les deux ouvertures inférieures 41 peuvent être fermées par des volets 41 solidaires d'une tige 43 permettant l'ouverture et la fermeture des volets 41 et leur blocage dans ces positions.

Les tiges 42 et 43 verticales sont articulées sur la surface intérieure du tube 31 à leur partie inférieure et à leur partie supérieurs et sont solidaires de dispositifs de commande d'ouverture ou de fermeture des volets à leur extrémité supérieure.

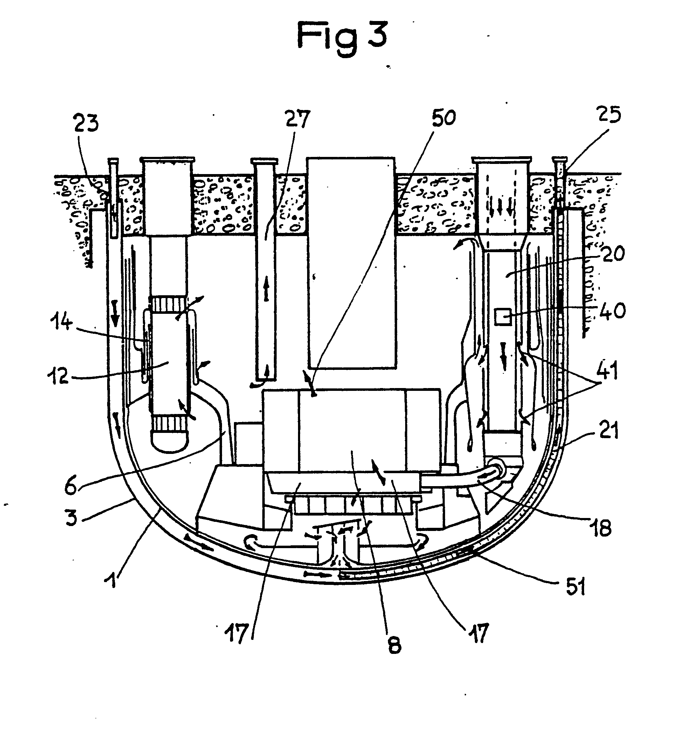

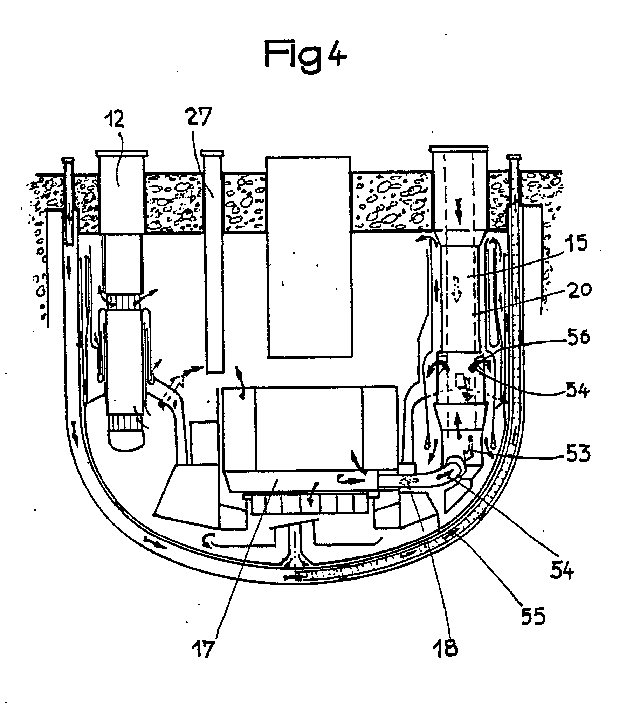

On va maintenant se reporter aux figures 3 et 4 pour décrire la mise en oeuvre du procédé suivint l'invention en utilisant le dispositif décrit en se référant aux figures 6 et 7.

Pour le préchauffage de la cuve, la disposition des moyens d'insufflation de gaz chaud est celle qui a été décrite en se référant à la figure 2.

Une des quatre pompes 15 du réacteur nucléaire à été remplacée par un dispositif d'insufflation de gaz tel que décrit en se référant aux figures 6 et 7. L'ensemble des structures internes à l'exception de cette pompe remplacée par le dispositif d'insufflation est en place dans la cuve. Le préchauffage est préalable au remplissage de la cuve par le sodium.

Sur la figure 3, on a représenté un échangeur 12 et le dispositif d'insufflation 20 remplaçant l'une des pompes 15 du réacteur.

On a représenté le parcours du gaz chaud insufflé par le dispositif 20 dans la cuve du réacteur et ses structures internes à l'aide de flèches 50.

On a de même représenté le parcours du gaz chaud entre la cuve principale 1 et la cuve de sécurité 3 par des flèches 51.

La figure 3 montre le parcours du gaz chaud qui est ici de l'azote à une température un peu supérieure à 140°C, à l'intérieur de la cuve principale 1 et dans l'espace intercuve, pendant une première phase du préchauffage où la majeure partie du gaz chaud est insufflée dans le collecteur froid de la cuve interne. Pour celà, les fenêtres inférieures 41 du dispositif 20 sont ouvertes, la fenêtre supérieure 40 est fermée et la vanne 39 du conduit central 37 du dispositif 20 est partiellement fermée. De plus les ouies 56 des trois pompes 15 qui ne sont pas remplacées par le dispositif d'insufflation 20 débouchant dans le collecteur froid sont fermées.

Le réglage d'ouverture des vannes est tel que la plus grande partie du gaz chaud pénètre dans le collecteur froid par les fenêtres 41. Le reste du gaz chaud est injecté dans le sommier 17 par la tuyauterie de pompe 18.

Le gaz chaud insufflé dans le collecteur froid ressort de celui-ci pour pénétrer dans le collecteur chaud soit par les cheminées de pompes soit par les échangeurs, soit par les dispositifs d'étanchéité 14 des échangeurs de chaleur et pour la très faible partie restante par l'espace d'écoulement du sodium de refroidissement de la cuve principale.

Le gaz chaud insufflé dans le sommier 17 de support du coeur traverse le coeur en quasi totalité pour se retrouver dans le collecteur chaud. Une très faible partie de ce gaz est insufflée dans le platelage et de là dans l'espace d'écoulement du sodium de refroidissement de la cuve principale.

L'intégralité du gaz chaud se retrouve dans le collecteur chaud et est extraite par la tuyaurerie 27 pour faire retour à l'installation de réchauffage.

Le gaz chaud arrivant par les orifices 23 est récupéré par le tube 21 dans l'espace intercuve après avoir réchauffé la surface externe de la cuve principale 1.

On obtient ainsi un réchauffage de l'ensemble des structures internes et de la cuve principale avec cependant un réchauffage moins intense du coeur qui n'est traversé que par une faible proportion du gaz chaud insufflé.

Sur la figure 4, on a représenté la répartition des débits de gaz chaud dans une deuxième phase du préchauffage où le gaz est insufflé à peu près en parts égales dans le sommier et dans le collecteur froid du réacteur.

On a représenté une pompe 15 en traits pleins à son emplacement et en pointillés au même emplacement, le dispositif 20 remplaçant l'une des quatre pompes 15 du réacteur.

Dans cette phase la circulation du gaz claud dans les structures internes de la cuve principale a été schématisée par des flèches 53 et 54 et la circulation du gaz dans l'espace intercuve par des flèches 55.

Dans cette phase de préchauffage, les fenêtres 40 et 41 du dispositif 20 sont toutes fermées et en conséquence le gaz chaud est envoyé dans le bulbe 15a de la pompe remplacée par le dispositif d'insufflation 20 dont les vannes supérieures 35 et 39 sont entièrement ouvertes. Le débit de gaz chaud arrive donc à la fois par l'espace central et l'espace périphérique dans le bulbe de la pompe 15a si bien que les flèches 53 représentées en pointillés correspondent à 100 % du débit total. Le gaz chaud est ensuite envoyé dans le sommier 17 du réacteur et une partie de ce gaz traverse le coeur du réacteur pour son réchauffage à une température voisine de 140°C. Une faible partie de ce gaz traverse le platelage et réchauffe les espaces de circulation du sodium de refroidissement de la cuve principale.

Le reste du gaz de réchauffage passe par les conduits 18 des trois pompes qui n'ont pas été remplacées par le dispositif d'insufflation (flèches 54). Les ouies 56 d'aspiration de ces trois pompes débouchant dans le collecteur froid sont ouvertes si bien que le gaz de préchauffage entrant par les conduites 18 dans ces pompes ressort dans le collecteur froid où il se répartit comme précédemment entre les cheminées de pompes, les échangeurs et leurs cheminées, et l'espace de retour du sodium de refroidissement de la cuve principale.

La totalité du gaz de réchauffage ressort dans le collecteur chaud d'où il est extrait par le tube 27 qui le renvoie à la station de réchauffage située à l'extérieur de la cuve.

A l'issue de cette seconde phase l'ensemble de la cuve principale du réacteur et de ses structures internes y compris les pompes et échangeurs est à une température voisine de 140°.

Dans une troisième phase du préchauffage, on commence à introduire le sodium liquide dans la cuve en continuant simultanément à insuffler le gaz au-dessus du niveau atteint par le sodium liquide. Cette insufflation de gaz permet de maintenir en température les structures portées à 140°, pendant le remplissage en sodium.

En parallèle le sodium du circuit secondaire qui a été préalablement rempli et préchauffé, est mis en circulation, ce qui apporte de la chaleur dans la cuve principale grâce aux échangeurs intermédiaires qui plongent dans cette cuve.

Pendant le remplissage en sodium, l'ensemble des fenêtres du dispositif d'insufflation 20 est ouvert en début de remplissage. Les vannes 35 et 39 sont ouvertes au maximum si bien que le gaz de préchauffage est envoyé concurremment dans le collecteur froid et dans le sommier 17 du réacteur.

Lorsque le sodium arrive au niveau du sommier 17, la vanne 29 du tube central 37 est mise en position de fermeture et le gaz n'est plus insufflé que par les fenêtres 40 et 41 du dispositif 20, au-dessus du sodium.

Lorsque le sodium arrive un peu en-dessous du niveau des fenêtres 41 celles-ci sont fermées et l'insufflation de gaz chaud se poursuit uniquement par la fendtre 40 qui est elle-même fermée lorsque le sodium arrive au niveau de cette fenêtre 40. Le remplissage est alors pratiquement terminé, puisque le niveau de la fenêtre 40 est très peu inférieur au niveau supérieur du sodium dans la cuve.

On a ainsi pu remplir la cuve en sodium sans risque de figeage de celui-ci et sans induire de contraintes thermiques excessives dans les structures du réacteur.

Ce but est atteint d'autre part sans utilisation de dispositif de réchauffage à placer en contact avec la cuve ou ses structures internes.

Il est à noter que l'insufflation à l'extérieur de la cuve interne, dans l'space intercuve peut être réalisée de façon constante pendant tout le remplissage de la cuve et qu il est même possible de maintenir ce soufflage pendant quelques temps pour maintenir la cuve et le sodium la remplissant en température, en concommittance avec l'apport thermique du circuit secondaire.

Ce soufflage par l'extérieur de la cuve peut être réglé par rapport au soufflage intérieur de gaz chaud en contact avec les structures internes.

Pour celà, on utilise la batterie de réchauffeurs et de soufflantes de gaz chaud représentée à la figure 5. On peut ainsi disposer du débit procuré par un nombre quelconque de réchauffeurs et de soufflantes en priorité sur l'un ou l'autre des circuits.

L'invention ne se limite pas au mode de réalisation qui vient d'être décrit; elle en comporte au contraire toutes les variantes supportées par les revendications. C'est ainsi qu'on peut imaginer l'utilisation de plusieurs dispositifs d'insufflation de gaz chaud disposés à La place de pompes du réacteur. Par exemple, on pourra utiliser deux dispositifs tels que 20 remplaçant deux pompes placés symétriquement par rapport à l'axe de la cuve. Une telle disposition permet de mieux équilibrer le réchauffage en réduisant les dissymétries lors de la circulation du gaz de préchauffage.

On peut imaginer d'autres modes de préchauffage avec des phases successives différentes de celles qui ont été décrites. Cette procédure dépend évidemment de la constitution des structures internes du réacteur qui conditionne la répartition du débit de gaz de préchauffage dans les différentes parties de ces structures.

## Revendications

1. Procédé de préchauffage d'une cuve et des structures internes d'un réacteur nucléaire à neutrons rapides de type intégré refroidi par du métal liquide, pour son remplissage en métal liquide, consistant à faire circuler en continu un gaz neutre à une température supérieure au point de fusion du métal liquide, d'une part en contact avec la surface extérieure de la cuve (1) et d'autre part en contact avec sa surface intérieure et ses structures internes (6, 8, 12, 15) comportant des composants ayant une enveloppe creuse, à récupérer le gaz neutre ayant circulé au contact de la cuve et à le réchauffer à l'extérieur de la cuve (1) avant de le remettre en circulation, caractérisé par le fait qu'on fait circuler le gaz neutre aussi bien au contact avec la surface externe qu'avec la surface interne des composants.

2. Procédé de préchauffage suivant la revendication 1, caractérisé par le fait que, dans une première phase du préchauffage, on insuffle la majeure partie du gaz chaud dans le collecteur froid (11) du réacteur dont la cuve est vide et comporte toute ses structures internes (6, 8, 12, 15) à l'exception d'au moins une pompe (15) remplacée par un dispositif (20) d'insufflation de gaz chaud, le reste du gaz chaud étant insufflé dans le sommier (17) de support du coeur (8) du réacteur, que, dans une seconde phase, on insuffle approximativement par moitié le débit de gaz dans le collecteur froid (11) du réacteur et dans le sommier (17) de support du coeur (8) de celui-ci et qu'enfin, dans une troisième phase du préchauffage, on commence le remplissage de la cuve (1) en sodium liquide, tout en insufflant du gaz chaud au-dessus de la surface de ce métal liquide.

3. Procédé de préchauffage suivant l'une quelconque des revendications 1 et 2, dans le cas ou le métal liquide est du sodium, caractérisé par le fait que le gaz neutre de préchauffage est à une température voisine de 140°C.

4. Procédé de préchauffage suivant l'une quelconque des revendications 1, 2 et 3, caractérisé par le fait que le gaz neutre de préchauffage est de l'azote.

5. Procédé de préchauffage suivant l'une quelconque des revendications 1, 2, 3 et 4, caractérisé par le fait que la circulation du gaz neutre de prechauffage en contact avec la surface extérieure de la cuve (1) est maintenue plus longtemps que la circulation du gaz à haute température avec la surface intérieure et les structures internes (6, 8, 12, 15) de la cuve (1).

6. Procédé de préchauffage suivant l'une quelconque des revendications 1, 2, 3, 4 et 5, caractérisé par le fait qu'on modifie le débit de gaz neutre à haute température circulant en contact avec la surface extérieure de la cuve (1) par rapport au débit du gaz neutre à haute température circulant en contact avec la surface intérieure et les structures internes (6, 8, 12, 15) de la cuve (1), pendant le préchauffage.

7. Procédé de préchauffage suivant l'une quelconque des revendications 1 à 6, caractérisé par le fait que le gaz neutre de préchauffage de la surface extérieure de la cuve (1) est introduit à travers la dalle (2) du réacteur, à la périphérie de la cuve principale (1), par des tubes passant dans des orifices (23) dans la dalle et récupéré par des tubes (21) disposés entre la cuve (1) et une cuve de sécurité (3) entourant la cuve (1) depuis la dalle (2) jusqu'au point le plus bas de l'espace entre la cuve principale (1) et la cuve de sécurité (3), des orifices (25) de passage des tubes (21) étant prévus dans la dalle (2) en position intercalée par rapport aux orifices (25).

8. Procédé de préchauffage suivant l'une quelconque des revendications 1 à 6, caractérisé par le fait que le gaz neutre de préchauffage de la surface externe de la cuve (1) est introduit dans l'espace existant entre la cuve (1) et une cuve de sécurité (3) qui l'entoure par des tubes (21) percés d'ouvertures sur toute leur longueur et placés dans l'espace entre les cuves (1) et (3) entre la dalle (2) et le point le plus bas de cet espace et récupéré à la partie supérieure de la cuve, sous la dalle (2), par des orifices (23) traversant la dalle (2) du réacteur à la périphérie de la cuve (1), les tubes (21) traversant la dalle (2) par des ouvertures (25) disposées de façon alternée par rapport aux ouvertures (23).

9. Dispositif de préchauffage de la surface intérieure et des structures internes d'une cuve de réacteur nucléaire à neutrons rapides caractérisé par le fait qu'il est de type intégré et comporte quatre pompes (15) et huit échangeurs de chaleur (12) plongeant dans la cuve,
- un ensemble de deux tubes coaxiaux (31, 37) se substituant à au moins une pompe (15) dans la cuve (1) dont le tube extérieur (31) comportant des ouvertures (40, 41) dans sa paroi a approximativement les dimensions d'une pompe et est relié à une conduite d'arrivée de gaz neutre à haute température venant d'une installation de réchauffage, par l'intermédiaire d'une vanne (35) et dont le tube interne (37) débouche dans le tube externe (31) à sa partie supérieure sur laquelle est placée une vanne (39), la partie inférieure des tubes (31, 37) étant engagée dans le bulbe (15a) de la pompe (15) à laquelle est substitué l'ensemble des tubes (31, 37),
- et un tube (27) de récupération du gaz traversant la dalle (2) fermant la cuve et débouchant dans le collecteur chaud de la cuve (1).

10. Dispositif de préchauffage suivant la revendication 9, caractérisé par le fait que les ouvertures (40, 41) dans la paroi du tube externe (31) comportent des volets de fermeture (40a, 41a) solidaires de tiges d'actionnement (42, 43) pour leur ouverture et leur fermeture, disposées suivant la direction axiale des tubes (31, 37) et solidaires à leur extrémité supérieure d'un moyen d'actionnement.

11. Dispositif de préchauffage suivant la revendication 10, caractérisé par le fait que le tube externe (31) comporte une ouverture (40) à sa partie supérieure et deux ouvertures (41) à sa partie inférieure juste au-dessus du bulbe (15a) de la pompe (15) dans lequel est engagée son extrémité inférieure.

**Patentansprüche**

1. Verfahren zum Vorwärmen eines Behälters und der inneren Bauteile eines mit flüssigem Metall gekühlten Kernreaktors mit schnellen Neutronen, der vollständig durch Flüssigmetall gekühlt ist, zum Auffüllen mit Flüssigmetall, das darin besteht kontinuierlich ein neutrales Gas mit einer höheren Temperatur als der Schmelzpunkt des Flüssigmetalls zirkulieren zu lassen, einerseits in Kontakt mit der äußeren Fläche des Behälters (1) andererseits in Kontakt mit der inneren Fläche der inneren Bauteile (6, 8, 12, 15), die Bauteile tragen, die eine hohle Ummantelung aufweisen, ferner das neutrale Gas, das in Kontakt mit dem Behälter war, wieder zu gewinnen und es außerhalb des Behälters (1) wieder aufzuheizen, bevor es erneut in Umlauf gebracht wird,
   dadurch gekennzeichnet,
   daß das neutrale Gas sowohl in Kontakt mit der äußeren Oberfläche als auch mit der Oberfläche der inneren Bauteile zirkulieren gelassen wird.

2. Verfahren nach Anspruch 1,
   dadurch gekennzeichnet,
   daß während einer ersten Vorwärmphase der größe Teil des heißen Gases in den kalten Sammler (11) des Reaktors eingeblasen wird, dessen Behälter leer ist und alle seine internen Bauteile (6, 8, 12, 15) außer mindestens einer Pumpe (15) aufweist, die durch eine Vorrichtung (20) zum Einblasen des heißen Gases ersetzt ist, wobei der Rest des heißen Gases in den Trägersattel (17) des Reaktorkerns (8) eingeblasen wird, das in einer zweiten Phase ungefähr die Hälfte des Gasdurchsatzes in den kalten Sammler (11) des Reaktors und in den Trägersockel des Reaktorkerns (17) eingeblasen wird und schließlich in einer dritten Vorwärmphase das Auffüllen des Behälters (1) mit flüssigem Natrium erfolgt, währenddessen heißes Gas auf die Oberfläche des Flüssigmetalls geblasen wird.

3. Verfahren nach einem der Ansprüche 1 und 2, für den Fall, daß das flüssige Metall Natrium ist,
   dadurch gekennzeichnet,
   daß das neutrale Vorwärmgas eine Temperatur um 140°C hat.

4. Verfahren nach einem der Ansprüche 1, 2 und 3,
   dadurch gekennzeichnet,
   daß das neutrale Gas zum Vorwärmen Stickstoff ist.

5. Verfahren nach einem der Ansprüche 1, 2, 3 und 4,
   dadurch gekennzeichnet,
   daß die Zirkulation des neutralen Vorwärmgases in Kontakt mit der äußeren Oberfläche des Behälters (1) länger aufrecht erhalten wird als die Zirkulation des heißen Gases im Inneren und in den inneren Bauteilen (6, 8, 12, 15) des Behälters (1).

6. Verfahren nach einem der Ansprüche 1, 2, 3, 4 und 5,
   dadurch gekennzeichnet,
   daß der Durchsatz des neutralen heißen Gases, daß in Kontakt mit der äußeren Oberfläche des Behälters (1) zirkuliert, im Verhältnis zum Durchsatz des heißen neutralen Gases, das in Kontakt mit der inneren Oberfläche und den inneren Bauteilen (6, 8, 12, 15) des Behälters (1) zirkuliert, während des Vorwärmens variiert wird.

7. Verfahren nach einem der Ansprüche 1 bis 6, dadurch gekennzeichnet,
daß das neutrale Gas zum Vorwärmen der äußeren Oberfläche des Behälters (1) durch den Reaktordeckel am Rand des Hauptbehälters (1) durch Rohre eingeführt wird, die durch Öffnung (23) in dem Deckel verlaufen und daß das Gas durch Rohre (21) die zwischen dem Behälter (1) und einem Sicherheitsbehälter (3), der den Behälters (1) von dem Deckel (2) bis zum tiefsten Punkt des Raums zwischen dem Hauptbehälter (1) und dem Sicherheitsbehälter (2) umschließt, wiedergewonnen wird, wobei Durchgangsöffnungen (25) für Rohre (21) in dem Deckel (2) an Stellen vorgesehen sind, die zwischen den Öffnungen (25) liegen.

8. Verfahren nach einem der Ansprüche 1 bis 6, dadurch gekennzeichnet,
daß das neutrale Gas zum Vorwärmen der äußeren Oberfläche des Behälters (1) in den Raum zwischen dem Behälter (1) und einem Sicherheitsbehälter (3), der diesen umgibt, durch Rohre (21), die mit Öffnungen über ihre gesamte Länge versehen und in den Raum zwischen den Behältern (1) und (3) eingeführt wird, zwischen dem Deckel (2) und dem niedrigsten Punkt dieses Raumes und das im oberen Teil des Behälters unter dem Deckel (2) durch Öffnungen (23) wiedergewonnen wird, die den Deckel (2) des Reaktors an der Peripherie des Behälters (1) durchqueren, wobei die Rohre (21), die den Deckel (2) durch Öffnungen (25) durchqueren so angeordnet sind, daß sie sich mit den Öffnungen (23) abwechseln.

9. Vorrichtung zum Vorwärmen der inneren Oberfläche und der inneren Bauteile eines Behälters eines Kernreaktors mit schnellen Neutronen,
dadurch gekennzeichnet,
daß die Vorrichtung integriert ist und vier Pumpen (15) und acht Wärmetauschern (12) aufweist, die in den Behälter eintauchen,
- eine Gruppe von zwei koaxialen Rohren (31, 37) zu mindestens einer Pumpe (15) in Behältern (1) führen, wobei das äußere Rohr (31) Öffnungen (40, 41) in seiner Wandung aufweist und ungefähr die Ausmaße einer Pumpe hat und mit einer Zufuhrleitung für neutrales Gas hoher Temperatur verbunden ist, das von einer Wiederaufheizanlage kommt, über ein Ventil (35) und wobei das innere Rohr (37) in dem äußeren Rohr (31) in dessen oberen Teil mündet, in dem ein Ventil (39) angebracht ist, wobei der untere Teil der Rohre (31, 37) in die Kugel (15a) der Pumpe (15) eingetaucht ist, in der die Gruppe der Rohre (31, 37) mündet und daß sie
- ein Rohr (27) zum Wiedergewinnen des Gases aufweist, das den Deckel (2) durchquert, der den Behälter abschließt und wobei das Rohr in dem heißen Sammler des Behälters (1) mündet.

10. Vorrichtung nach Anspruch 9, dadurch gekennzeichnet,
daß die Öffnungen (40, 41) in der Wandung des äußeren Rohres (31) Schließklappen (40a, 41a) aufweisen, die mit Betätigungsstangen (42, 43) zu deren Öffnung bzw. Verschließen, verbunden sind und wobei diese entlang der Axialrichtung der Rohre (31, 37) verlaufen und an ihrem oberen Ende an einem Betätigungsorgan befestigt sind.

11. Vorrichtung nach Anspruch 10, dadurch gekennzeichnet,
daß das äußere Rohr (31) eine Öffnung (40) in ihrem oberen Teil und zwei Öffnungen (41) in ihrem unteren Teil gerade oberhalb der Kugel (15a) der Pumpe (15), in der ihr unteres Ende mündet, aufweist.

**Claims**

1. A process for preheating a vessel and the internal structures of a fast neutron nuclear reactor of the integrated type cooled by liquid metal, for the filling thereof with liquid metal, consisting in continously circulating a neutral gas at a temperature higher than the melting point of the liquid metal, on one hand in contact with the exterior surface of the vessel (1) and on the other hand in contact with its interior surface and its internal structures (6, 8, 12, 15) comprising components having a hollow case, recovering the neutral gas having circulated in contact with the vessel and reheating it outside the vessel (1) before putting it back into circulation, characterised in that the neutral gas is circulated in contact both with the external surface and with the internal surface of the components.

2. A preheating process according to claim 1, characterised in that, in a first stage of the preheating, the major part of the hot gas is blown into the cold header (11) of the reactor whose vessel is empty and includes all its internal structures (6, 8, 12, 15) except for at least one pump (15) replaced by a hot gas blowing device (20), the rest of the hot gas being blown into the support bolster (17) of the core (8) of the reactor for in a second stage, the gas flow is blown approximately for one half into the cold header (11) of the rector and into the support bolster (17) of the core (8) of the reactor and in a third preheating stage, the filling of the vessel (1) with liquid sodium is commenced while blowing the hot gas above the surface of this liquid metal.

3. A preheating process according to either one of the claims 1 and 2, in the case where the liquid metal is sodium, characterised in that the neutral preheating gas is at a temperature in the neighbourhood of 140° C.

4. A preheating process according to any one of the claims 1, 2 and 3, characterised in that the neutral preheating gas is nitrogen.

5. A preheating process according to any one of the claims 1, 2, 3 and 4, characterised in that the circulation of the neutral preheating gas in contact with the exterior surface of the vessel (1) is maintained for a longer period than the circulation of the gas at high temperature with the interior surface and the internal structures (6, 8, 12, 15) of the vessel (1).

6. A preheating process according to any one of the claims 1, 2, 3, 4 and 5, characterised in that the flow of neutral gas at high temperature circulating in contact with the exterior surface of the vessel (1) is modified with respect to the flow of neutral gas at high temperature circulating in contact with the interior surface and the internal structures (6, 8, 12, 15) of the vessel (1) during the preheating.

7. A preheating process according to any one of the claims 1 to 6, characterised in that the neutral preheating gas of the exterior surface of the vessel (1) is introduced through the slab (2) of the reactor, at the periphery of the main vessel (1) through tubes extending in orifices (23) in the slab and recovered through tubes (21) disposed between the vessel (1) and a safety vessel (3) surrounding the vessel (1) from the slab (2) to the lowest point of the space between the main vessel (1) and the safety vessel (3), orifices (25) for the passage of the tubes (21) being provided in the slab (2) in interposed position relative to the orifices (25).

8. A preheating process according to any one of the claims 1 to 6, characterised in that the neutral preheating gas of the external surface of the vessel 1 is introduced into the space existing between the vessel (1) and a safety vessel (3) which surrounds it through tubes (21) provided with openings throughout their length and placed in the space between the vessels (1) and (3) between the slab (2) and the lowest point of the space and recovered in the upper part of the vessel, below the slab (2), through orifices (23) extending through the slab (2) of the reactor at the periphery of the vessel (1), the tubes (21) extending through the slab (2) through openings (25) disposed in alternating relation to the openings (23).

9. A device for preheating the interior surface and the internal structures of a fast neutron nuclear reactor, characterised in that it is of the integrated type and comprises four pumps (15) and eight heat exchangers (12) extending into the vessel,

- an assembly of two coaxial tubes (31, 37) subsituted for at least one pump (15) in the vessel (1) whose exterior tube (31) having openings (40, 41) in its wall has approximately the dimensions of a pump and is connected to a supply conduit for a neutral gas at high temperature coming from a heating installation, through a valve (35) and whose interior tube (37) opens into the exterior tube (31) in its upper part in which is placed a valve (39), the lower part of the tubes (31, 37) being engaged in the bulb (15a) of the pump (15) for which the assembly of the tubes (31, 37) is substituted,

- and a tube (27) for recovering the gas extending through the slab (2) closing the vessel and opening into the hot header of the vessel (1)

10. A preheating device according to claim 9, characterised in that the openings (40, 41) in the wall of the exterior tube (31) have closing flaps (40a, 41a) connected to actuating rods (42, 43) for their opening and closing, extending in the axial direction of the tubes (31, 37) and connected at their upper end to an actuating means.

11. A preheating device according to claim 10, characterised in that the exterior tube (31) has an opening (40) in its upper part and two openings (41) in its lower part just above the bulb (15a) of the pump (15) in which its lower end is engaged.

# Fig 1

Fig 2

0 129 468

# Fig 3

5

# Fig 4

# Fig 5

0 129 468

Fig 6

Fig 7